# EUROPÄISCHE PATENTSCHRIFT

(11) **EP 1 126 259 B1**
(45) Veröffentlichungstag und Bekanntmachung des Hinweises auf die Patenterteilung: **10.12.2008**
(21) Anmeldenummer: 00103016.2
(22) Anmeldetag: 15.02.2000
(51) Int. Cl.: G01L 9/12, G01L 19/00

(54) **Drucksensor**
Pressure sensor
Capteur de pression

(43) Veröffentlichungstag der Anmeldung: 22.08.2001
(73) Patentinhaber: Endress + Hauser GmbH + Co. KG, 79689 Maulburg (DE)
(72) Erfinder: Flögel, Karl, 79650 Schopfheim (DE); Uehlin,Thomas, 79650 Schopfheim (DE); Werner, Thomas, 79689 Maulburg (DE)
(74) Vertreter: Andres, Angelika Maria

(56) Entgegenhaltungen:
- US-A- 4 617 607
- US-A- 5 034 848
- US-A- 5 571 970
- PATENT ABSTRACTS OF JAPAN vol. 9, no. 64 (P-343), 23. März 1985 (1985-03-23) & JP 59 198333 A (MATSUSHITA DENKI SANGYO KK), 10. November 1984 (1984-11-10)
- PATENT ABSTRACTS OF JAPAN vol. 7, no. 60 (P-182) [1205], 12. März 1983 (1983-03-12) & JP 57 206842 A (MATSUSHITA DENKI SANGYO K.K.), 18. Dezember 1982 (1982-12-18)

## Beschreibung

Die Erfindung betrifft einen Drucksensor.

In der Druckmeßtechnik werden z.B. Absolut- und Relativdrucksensoren eingesetzt. Bei Absolutdrucksensoren wird ein zu messender Druck absolut, d.h. als Druckunterschied gegenüber einem Vakuum erfaßt. Mit einem Relativdrucksensor wird ein zu messender Druck in Form eines Druckunterschiedes gegenüber einem Referenzdruck aufgenommen. Der Referenzdruck ist ein Umgebungsdruck der dort herrscht, wo sich der Sensor befindet. Bei den meisten Anwendungen ist dies der Atmosphärendruck am Einsatzort.

Drucksensoren werden in einer Vielzahl von Industriezweigen eingesetzt, z.B. in der Chemie und in der Lebensmittelindustrie. In diesen Industrien sind häufig große Anlagen vorhanden in denen zur Erfassung, Steuerung, Regelung und/oder Automatisierung eines in der Anlage ablaufenden Prozesses an mehreren Stellen Drücke zu messen sind. Dabei kommen eine Vielzahl von Drucksensoren z.B. mit unterschiedlichen Meßbereichen zum Einsatz.

Es ist daher sowohl für den Anwender vor Ort, als auch für den Hersteller der Drucksensoren aus Gründen der Lagerhaltung, der Wartung und der Praktikalität von Vorteil, Drucksensoren als modulare Baueinheit auszubilden, die dann vor Ort erforderlichenfalls z.B. mit einem Meßgerätgehäuse mit einer auf die Anwendung zugeschnittenen Elektronik oder mit einem für den Meßort passenden Prozeßanschluß versehen werden kann.

Drucksensoren weisen üblicherweise eine Meßzelle, eine Meßzelleneinfassung und eine mit der Meßzelle verbundene Sensorelektronik auf. Bei modularen Drucksensoren muß die Sensorelektronik für einen Anschluß derselben, z.B. an eine Meßgerätelektronik oder eine Versorungs- und/oder Signalauswerteeinheit, zugänglich sein. Gerade die Sensorelektronik und deren elektrische Anschlüsse sind aber besonders empfindlich gegenüber Feuchtigkeit und gegenüber mechanischen Belastungen.

Es ist eine Aufgabe der Erfindung, einen Drucksensor mit einer Meßzelle, einer Meßzelleneinfassung und einer mit der Meßzelle verbundenen Sensorelektronik anzugeben, bei dem die Sensorelektronik und deren elektrische Anschlüsse gegenüber Feuchtigkeit und mechanischen Belastungen geschützt sind.

Hierzu besteht die Erfindung in einem Drucksensor mit
- einer Meßzelle
- einer Meßzelleneinfassung und
- einer mit der Meßzelle verbundenen Sensorelektronik,
- bei dem die Sensorelektronik in ein Schutzpolster eingekapselt ist und
- bei dem das Schutzpolster von einem Verguß umgeben ist.

Gemäß einer Weiterbildung der Erfindung ist in einem in radialer Richtung zwischen der Meßzelle und der Meßzelleneinfassung bestehenden Spalt eine Dichtung eingespritzt.

Gemäß einer weiteren Weiterbildung ist aufgrund der Abmessungen der Meßzelle, der eingespritzten Dichtung und der Meßzelleneinfassung eine thermische Ausdehnung von Meßzelle und eingespritzter Dichtung in radialer Richtung gleich einer thermischen Ausdehnung der Meßzelleneinfassung in radialer Richtung.

Gemäß einer Ausgestaltung besteht die eingespritzte Dichtung aus einem Silikon oder aus Polyurethan.

Gemäß einer Ausgestaltung ist das Schutzpolster ein Schaumstoff.

Gemäß einer weiteren Ausgestaltung weist der Schaumstoff offenporige und geschlossenporige Zellen auf.

Gemäß einer weiteren Ausgestaltung ist der Verguß ein Polyurethan.

Gemäß einer Weiterbildung der Erfindung weist der Drucksensor eine metallische Abdeckung auf, die zwischen dem Verguß und dem Schutzpolster verläuft.

Die Erfindung und weitere Vorteile werden nun anhand der Figuren der Zeichnung, in denen zwei Ausführungsbeispiele dargestellt sind, näher erläutert. Gleiche Elemente sind in den Figuren mit den gleichen Bezugszeichen versehen.
- Fig. 1: zeigt einen Schnitt durch einen Drucksensor, der mit einem Meßgerätgehäuse und einem Prozeßanschluß verbunden ist; und
- Fig. 2: zeigt einen Schnitt durch einen Drucksensor mit integriertem Prozeßanschluß, der mit einem Meßgerätgehäuse verbunden ist.

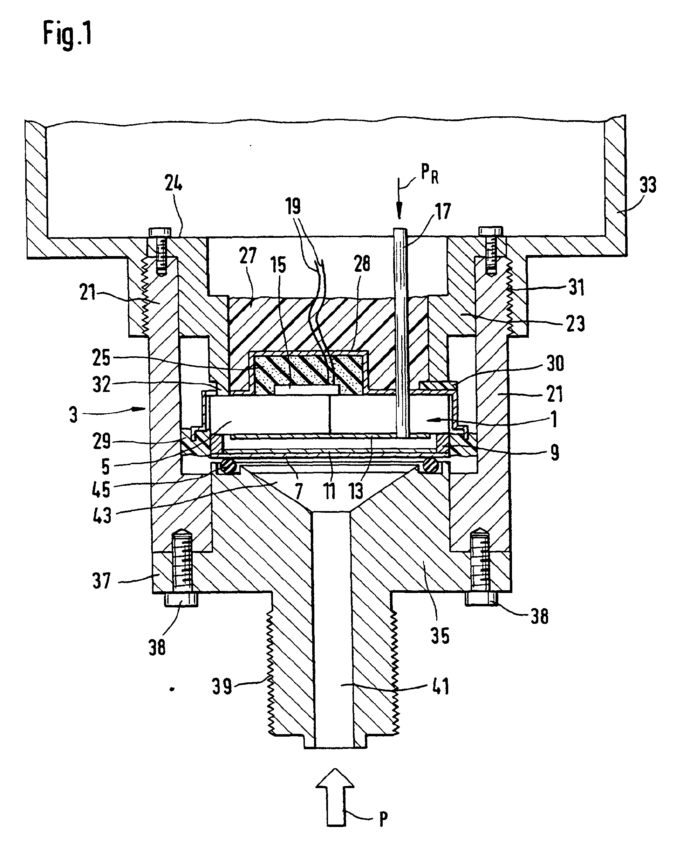

In Fig. 1 ist ein Schnitt durch einen erfindungsgemäßen Drucksensor dargestellt. Er weist eine Meßzelle 1 auf, die in einer Meßzelleneinfassung 3 fixiert ist.

Die Meßzelle 1 ist in dem gezeigten Ausführungsbeispiel eine kapazitive keramische Relativdruckmeßzelle. Diese weist einen Grundkörper 5 und eine Meßmembran 7 auf. Der Grundkörper 5 besteht z.B. aus Keramik. Die Meßmembran 7 kann ebenfalls aus Keramik bestehen oder z.B. aus Saphir. Die Meßmembran 7 und der Grundkörper 5 sind an deren Rand unter Bildung einer Meßkammer mittels einer Fügestelle 9 druckdicht und gasdicht miteinander verbunden. Die Meßmembran 7 ist druckempfindlich, d.h. ein auf sie einwirkender Druck bewirkt eine Auslenkung der Meßmembran 7 aus deren Ruhelage.

Auf einer Innenseite der Meßmembran 7 ist eine Elektrode 11 und auf einer gegenüberliegenden Innenseite des Grundkörpers 1 ist mindestens eine Gegenelektrode 13 angeordnet. Die Elektrode 11 der Meßmembran 7 ist durch die Fügestelle 9 hindurch elektrisch kontaktiert und außerhalb z.B. mit Masse verbunden. Die Gegenelektrode 13 des Grundkörpers 5 ist durch den Grundkörper 5 hindurch zu dessen Außenseite hin elektrisch kontaktiert und führt zu einer auf dem Grundkörper 5 angeordneten Sensorelektronik 15. Elektrode 11 und Gegenelektrode 13 bilden einen Kondensator und die Sensorelektronik 15 formt die Kapazitätsänderungen des Kondensators z.B. in eine sich entsprechend ändernde elektrische Spannung um.

Der Grundkörper 5 weist eine durchgehende Bohrung auf, in die ein Röhrchen 17 eingeführt ist, das einen Innenraum der Meßzelleneinfassung 3 mit der Meßkammer verbindet. Über das Röhrchen 17 wirkt ein in der Meßzelleneinfassung 3 herrschender Referenzdruck P_{R}, auf den der zu messende Druck zu beziehen ist, auf eine Innenseite der Meßmembran 7 ein. Dies ist in Fig. 1 durch einen Pfeil symbolisch dargestellt

Im Betrieb wirkt auf eine Außenseite der Meßmembran 7 ein zu messender Druck P ein. Dies ist in Fig. 1 ebenfalls durch einen Pfeil symbolisch dargestellt.

Der Druck P und der Referenzdruck P_{R} bewirken eine vom zu messenden Relativdruck abhängige Auslenkung der Meßmembran 7 die von dem zuvor beschriebenen kapazitiven elektromechanischen Wandler erfaßt und von der Sensorelektronik 15 in eine elektrische Meßgröße umgewandelt wird. Die Meßgröße steht über Anschlußleitungen 19 einer weiteren Verarbeitung und/oder Auswertung zur Verfügung.

Anstatt der beschriebenen kapazitiven keramischen Meßzelle kann z.B. auch eine piezoresistive Meßzelle verwendet werden. Bei diesen Arten von Meßzellen weist der Wandler auf der Meßmembran aufgebrachte Dehnmeßstreifen auf. Die Meßkammer kann auch bei diesen Meßzellen durch einen Grundkörper, auf dem die Meßmembran mit deren äußerem Rand befestigt wird, und die Meßmembran selber gebildet sein.

Die Meßzelleneinfassung 3 ist im wesentlichen zylindrisch und weist ein im Betrieb prozeß-zugewandtes Ende und ein im Betrieb prozeß-abgewandtes Ende auf. Sie besteht vorzugsweise aus einem Metall, z.B. aus einem rostfreien Stahl. Die Meßzelle 1 ist in der Meßzelleneinfassung 3 derart fixiert, daß die Meßmembran 7 in prozeß-zugewandter und der Grundkörper 5 in prozeß-abgewandter Richtung weist.

Die Meßzelleneinfassung 3 weist ein im wesentlichen zylindrisches äußeres Element 21 und ein koaxial dazu angeordnetes ebenfalls im wesentlichen zylindrisches inneres Element 23 auf. Das innere Element 23 weist an dessen prozeß-abgewandten Ende eine sich radial nach außen erstreckende Schulter 24 auf, die auf einer prozeß-abgewandten Stirnfläche des äußeren Elements 21 aufliegt. Zur Verbindung des inneren Elements 23 mit dem äußeren sind Schrauben vorgesehen, die durch die Schulter 24 hindurch in entsprechende Bohrungen des äußeren Element 21 hinein geschraubt sind. Eine prozeß-zugewandte Stirnfläche des inneren Elements 23 dient als Abstützung für die Meßzelle 1.

Die Sensorelektronik 15 ist in ein Schutzpolster 25 eingekapselt. Das Schutzpolster 25 ist vorzugsweise aus einem sehr weichen Material und dient dazu mechanische Krafteinwirkungen von der Sensorelektronik 15 und von deren Verbindung zu den Anschlußleitungen 19 fern zu halten. Ein Innenraum der Meßzelleneinfassung 3, der durch die Meßzelle 1, den Hohlzylinder 23 und das Schutzpolster 25 begrenzt ist, ist mit einem Verguß 27 ausgefüllt. Der Verguß 27 weist vorzugsweise eine sehr geringe Wasseraufnahme auf. Es sind z.B. Polyurethane verwendbar. Werkstoffe mit geringer Wasseraufnahme sind in der Regel sehr hart und eignen sich daher nicht zur Aufnahme von mechanisch empfindlichen Bauteilen. Da die Sensorelektronik 15 jedoch erfindungsgemäß durch das Schutzpolster 25 mechanisch geschützt ist, kann hier ein solcher Verguß mit einer sehr geringen Wasseraufnahme eingesetzt werden.

Als Schutzpolster 25 eignet sich bevorzugt ein Schaumstoff. Wie Untersuchungen gezeigt haben, werden die besten Ergebnisse mit einem Schaumstoff erzielt, der offenporige und geschlossenporige Zellen aufweist. Diese Werkstoffe sind, insb. aufgrund der offenporigen Zellen, sehr weich und übertragen praktisch keine Kräfte von außen auf die Sensorelekronik 15. Sie verhalten sich ähnlich wie ein Schwamm und sind insb. leicht komprimierbar. Aufgrund dieser Eigenschaft bewirkt auch eine thermische Ausdehnung von in dem Schutzpolster 25 eingeschlossener Luft oder eingeschlossenem Gas praktisch keine Krafteinwirkung auf die Sensorelektronik 15.

Weiter bieten Schaumstoffe den Vorteil, daß sie vorgefertigt und auf die Sensorelektronik 15 aufgesetzt werden können. Außerdem kann sich ein gemischtzelliger Schaumstoff beim Herstellen des Drucksensors aufgrund der geschlossenporigen Zellen, nicht mit der flüssigen Vergußmasse für den Verguß 27 füllen, die dann im Schutzpolster 25 aushärten und dieses spröde und unelastisch machen würde.

Bei dem in Fig. 1 dargestellten Ausführungsbeispiel ist eine metallische Abdeckung 28 vorgesehen, die zwischen dem Schutzpolster 25 und dem Verguß 27 verläuft. Die Abdeckung 28 ist vorzugsweise entlang einer prozeß-abgewandten Grundfläche des Grundkörpers 5 fortgesetzt und umgibt eine zylindrische äußere Mantelfläche der Meßzelle 1. Die Abdeckung 28 weist lediglich zwei möglichst kleine Öffnungen auf. Durch eine erste Öffnung sind die Anschlußleitungen 19 und durch eine zweite das Röhrchen 17, daß zur Zufuhr des Referenzdrucks P_{R} dient, hindurchgeführt.

Bei einem entsprechend aufgebauten Absolutdrucksensor, der kein Röhrchen zur Zufuhr eines Referenzdrucks aufweist, entfällt natürlich eine Öffnung in der metallischen Abdeckung 28 für das Röhrchen.

Die metallische Abdeckung 28 erfüllt zwei Aufgaben. Zum einen bewirkt sie eine teilweise metallische Einkapselung von Meßzelle 1 und Sensorelektronik 15. Hierzu ist sie vorzugsweise mit Masse oder einem Referenzpotential, wie z.B. Schaltungsnull oder einem Eingang des Druckmeßgeräts verbunden. Sie bildet einen größtenteils geschlossenen Faraday- Käfig über den von außen einwirkende elektromagnetische Störungen abfließen können.

Zum anderen bildet sie einen äußerst effektiven Feuchteschutz für eingeschlossene Bauelemente. Die metallische Abdeckung 28 bildet eine Diffusionssperrschicht, die verhindert, daß über die Zeit in dem Verguß 27 eingelagerte Feuchtigkeit zum Schutzpolster 25 und zu der darin angeordneten Sensorelektronik 15 gelangt.

Vorzugsweise ist die metallische Abdeckung 28 gegenüber der Meßzelleneinfassung 3 elektrisch isoliert. Dies erfolgt z.B., wie auf der rechten Hälfte von Fig. 1 dargestellt, indem auf einer ringscheibenförmigen meßzellen-abgewandten äußeren Fläche der metallischen Abdeckung 28 ein Ring 30 aus einem Isolator, z.B. einem Kunststoff, angeordnet ist. Auf einer meßzellen-abgewandten ringscheibenförmigen Fläche des Rings 30 liegt das innere Element 23 der Meßzelleneinfassung 3 auf.

Alternativ kann, wie auf der linken Seite von Fig. 1 dargestellt, die metallische Abdeckung 28 Ausnehmungen, z.B. in einem Kreis angeordnete Löcher, aufweisen, durch die hindurch sich an das innere Element 23 in meßzellenzugewandter Richtung endseitig angeformte Stützen 32 bis zur Meßzelle 1 erstrecken. Die metallische Abdeckung 28 berührt die Stützen 32 nicht.

In einen in radialer Richtung zwischen der Meßzelle 1 und der Meßzelleneinfassung 3 bestehenden Spalt ist eine Dichtung 29 eingespritzt. Die Dichtung 29 ist vorzugsweise an einem prozeß-zugewandten Ende der Meßzelle 1 angeordnet und umschließt eine äußere zylindrische Mantelfläche der Meßmembran 7 und die Fügestelle 9. Die eingespritzte Dichtung 29 besteht z.B. aus einem Silikon oder aus einem Polyurethan. Diese Werkstoffe eignen sich besonders dazu in enge Spalte eingespritzt zu werden. Sie füllen den Spalt vollständig aus und ermöglichen auch bei Meßzelleneinfassungen 3 mit großen Herstellungstoleranzen und bei starken Unebenheiten an der Grenzfläche zur Meßzelle 1, wie sie insb. in der Umgebung der Fügestelle 9 auftreten können, eine optimale Dichtungsqualität.

Ein weiterer Vorteil der eingespritzten Dichtung 29 besteht darin, daß keine Kraft auf die Dichtung 29 erforderlich ist, damit sie ihre Dichtwirkung entfaltet. Dies bietet den großen Vorteil, daß die Meßzelle 1 in radialer Richtung spannungs- bzw. einspannungsfrei ist. Eine wie auch immer geartete Einspannung in radialer Richtung könnte zu einer Veränderung der druckabhängigen Empfindlichkeit der Meßmembran 7 führen und Ursache für Meßfehler sein.

Für den Fall, daß der Drucksensor in einer Umgebung eingesetzt werden soll, in der er starken Temperaturschwankungen ausgesetzt ist, weisen die Meßzelle 1, die eingespritzte Dichtung 29 und die Meßzelleneinfassung 3 in radialer Richtung vorzugsweise Abmessungen auf, bei denen eine thermische Ausdehnung von der Meßzelle 1 und der eingespritzten Dichtung 29 zusammen in radialer Richtung gleich einer thermischen Ausdehnung der Meßzelleneinfassung 3 in radialer Richtung ist.

Durch eine solche Dimensionierung der Bauteile wird erreicht, daß sich die Bauteile bei einer Temperaturänderung gleichermaßen ausdehnen bzw. zusammenziehen. Dadurch ist die Meßzelle 1, insb. die Meßmembran 7 vor Verspannungen geschützt.

Die Dichtung 29 verklebt beim Einspritzen mit der Meßzelleneinfassung 3 und der Meßzelle 1. Durch die Klebwirkung der Dichtung 29 ist die Meßzelle 1 in der Meßzelleneinfassung 3 in prozeß-zugewandter Richtung fixiert. In prozeß-abgewandter Richtung ist die Meßzelle 1 auf dem inneren Element 23 abgestützt.

Der vorbeschriebene Drucksensor ist ein modulares Bauteil, bei dem die Sensorelektronik 15 sicher vor Feuchtigkeit geschützt ist und bei dem die Sensorelektronik 15 und die Anschlußleitungen 19 sicher vor mechanischen Krafteinwirkungen geschützt sind.

Der Drucksensor weist an einer prozeß-abgewandten zylindrischen äußeren Mantelfläche ein Außengewinde 31 auf, auf das ein mit einer formgleichen mit einem Innengewinde versehenen Öffnung ausgestattetes Meßgerätgehäuse 33 aufgeschraubt ist. In dem Meßgerätgehäuse 33 kann z.B. eine weiterführende Elektronik angeordnet sein, die die von der Sensorelektronik 15 über die Anschlußleitungen 19 zur Verfügung gestellten Meßgrößen weiter verarbeitet und z.B. ein in einer speziellen Anwendung gewünschtes Ausgangssignal abgibt. Besonders häufig verwendete Ausgangssignale sind z.B. Signalströme, deren Stromstärke sich in Abhängigkeit vom aktuellen Meßwert ändert oder digitale Signale, die über eine Busanschaltung auf eine Busleitung eingekoppelt werden.

In prozeß-zugewandter Richtung ist der Drucksensor mit einem Prozeßanschluß 35 verbunden, der dazu dient, das aus Meßgerätgehäuse 33, Drucksensor und Prozeßanschluß 35 bestehende Druckmeßgerät an einem Einsatzort zu befestigen. In dem gezeigten Ausführungsbeispiel weist der Prozeßanschluß 35 eine sich radial nach außen erstreckende Schulter 37 auf, die mit einer der Meßzelleneinfassung 3 zugewandten Ringfläche an einer Ringfläche der Meßzelleneinfassung 3 aufliegt. Der Prozeßanschluß 35 ist mittels durch die Schulter 37 hindurch in die Meßzelleneinfassung 3 eingeschraubten Schrauben 38 befestigt. An einem von der Druckmeßzelle abgewandten Ende weist der Prozeßanschluß 35 ein Außengewinde 39 auf, mittels dessen das Druckmeßgerät dann an einem in Fig. 1 nicht dargestellten Meßort zu befestigen ist. Andere Arten der Befestigung, z.B. mittels einer Flanschverbindung, sind ebenfalls einsetzbar.

Der Prozeßanschluß 35 weist eine zentrale axiale durchgehende Bohrung 41 auf, die sich vor der Meßmembran 7 zu einer Kammer 43 aufweitet. Die Kammer 43 ist durch die Meßmembran 7, den Prozeßanschluß 35 und eine zwischen einer äußeren druckunempfindlichen Ringfläche der Meßmembran 7 und einer äußeren der Meßmembran 7 zugewandten Ringfläche des Prozeßanschlusses 35 eingespannte Dichtung 45 begrenzt. Der Prozeßanschluß 35 weist eine meßmembran-zugewandte ringförmig umlaufende Nut auf, in die die Dichtung eingelegt ist. Ein am Meßort herrschender Druck P wirkt über die Bohrung 41 und die Kammer 43 auf die Meßmembran 7 ein.

Der Prozeßanschluß 35 ist derart gegen den Drucksensor geschraubt, daß dadurch die Meßzelle 1 zwischen dem inneren Element 23 und dem Prozeßanschluß 35 unter Kompression der Dichtung 45 eingespannt ist. Die Dichtung 45 bewirkt dabei zum einen eine verspannungsfreie Einspannung der Meßzelle 1 in der Meßzelleneinfassung 3 und zum anderen eine prozeßseitige Abdichtung zwischen einem Innenraum der Meßzelleneinfassung 3 und der Kammer 43.

Der Innenraum der Meßzelleneinfassung 3 ist natürlich zusätzlich durch die eingespritzte Dichtung 29 geschützt. Hierdurch ist es möglich, den Prozeßanschluß 35 nach Belieben auszutauschen und/oder den Drucksensor auch ohne den Prozeßanschluß 35 zu lagern. Im Gegensatz zur Dichtung 45, die ja eine axiale Dichtung ist, ist die eingespritzte Dichtung 29 eine radiale Dichtung. Hierdurch ist es möglich in prozeß-zugewandter Richtung vor der eingespritzten Dichtung 29 den Prozeßanschluß 35 ohne Beeinträchtigung der Dichtwirkung auswechselbar zu gestalten. Auch bei einem zwischen der Meßzelleneinfassung 3 und dem Prozeßanschluß 35 an deren Verbindungsstelle bestehenden Spalt sorgt die Dichtung 29 dafür, daß der Innenraum der Meßzelleneinfassung 3 gegenüber der Umgebung des Drucksensors abgedichtet ist.

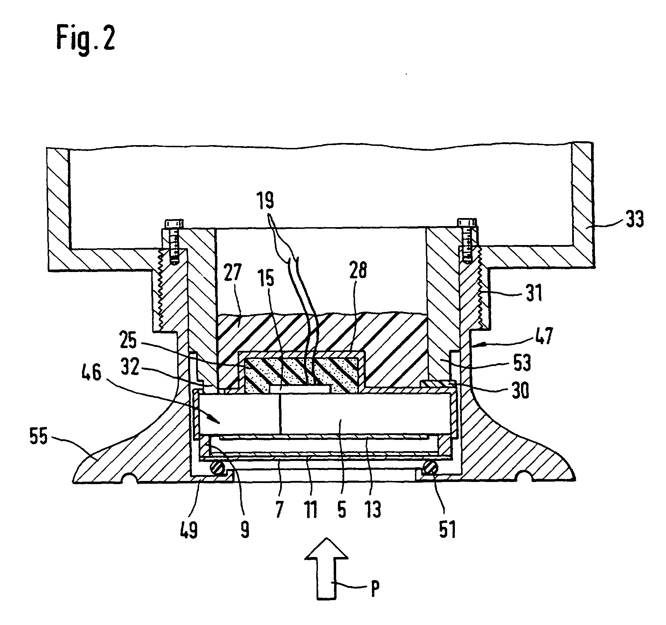

Fig. 2 zeigt einen Schnitt durch ein weiteres Ausführungsbeispiel eines erfindungsgemäßen Drucksensors. Aufgrund der großen Übereinstimmung der beiden Ausführungsbeispiele werden nachfolgend lediglich die Unterschiede näher erläutert.

Bei dem Ausführungsbeispiel von Fig. 2 handelt es sich um einen Absolutdrucksensor. Er weist eine Meßzelle 46 auf, die identisch zu der zuvor beschriebenen Meßzelle 1 aufgebaut ist, deren Innenraum jedoch evakuiert ist und keine Verbindung zur Außenwelt, insb. kein Referenzluftröhrchen, aufweist.

Der Drucksensor weist eine Meßzelleneinfassung 47 auf, die mit einem Meßgerätgehäuse 33 über ein Außengewinde 31 verbunden ist. Anders als bei dem Fig. 1 dargestellten Ausführungsbeispiel ist hier der Prozeßanschluß kein separates Bauteil sondern integraler Bestandteil der Meßzelleneinfassung 47.

Die Meßzelleneinfassung 47 ist im wesentlichen zylindrisch und weist endseitig in prozeß-zugewandter Richtung eine Öffnung mit einer sich radial nach innen erstreckenden Schulter 49 auf, auf der die Meßmembran 7 mit deren äußerem druckunempfindlichen Rand unter Zwischenfügung einer Dichtung 51, z.B. eines O-Rings, aufliegt. Die Meßzelleneinfassung 47 weist ein im wesentlichen zylindrisches inneres Element 53 auf, daß von prozeß-abgewandten Seite her gegen die Meßzelle 1 gepreßt ist. Es weist eine sich radial nach außen erstreckende Schulter auf mit der es auf einer meßzellen-abgewandten ringscheibenförmigen Stirnfläche der äußeren Meßzelleneinfassung 47 aufliegt. Es ist mittels Schrauben mit diesem verbunden und preßt so gegen die Meßzelle, die hierdurch wiederum gegen die Dichtung 51 gepreßt ist.

Zur Befestigung der Meßzelleneinfassung 47 an einem Meßort ist die Meßzelleneinfassung 47 mit einem lediglich schematisch dargestellten Prozeßanschluß 55 versehen, der integraler Bestandteil der Meßzelleneinfassung 47 ist. Bei dem dargestellten Prozeßanschluß 55 handelt es sich um einen Standardanschluß, der in der internationalen Norm ISO 2852 definiert ist. Dieser Anschluß ist in der Meßtechnik unter dem Handelsnamen 'Triclamp' bekannt. Andere Arten der Befestigung sind ebenfalls einsetzbar.

Aufgrund der Dichtung 51 und der Ausbildung des Prozeßanschlusses als einem integralen Bestandteil des Drucksensors kann hier die radiale eingespritzte Dichtung entfallen.

## Patentansprüche

1. Drucksensor mit
- einer Meßzelle (1, 46)
- einer Meßzelleneinfassung (3, 47) und
- einer mit der Meßzelle (1, 46) verbundenen Sensorelektronik (15), **dadurch gekennzeichnet, dass**
- die Sensorelektronik (15) in ein Schutzpolster (25) eingekapselt ist und
- das Schutzpolster (25) von einem Verguß (27) umgeben ist.

2. Drucksensor nach Anspruch 1, bei dem
in einem in radialer Richtung zwischen der Meßzelle (1) und der Meßzelleneinfassung (3) bestehenden Spalt eine Dichtung (29) eingespritzt ist.

3. Drucksensor nach Anspruch 2, bei dem
aufgrund der Abmessungen der Meßzelle (1), der eingespritzten Dichtung (29) und der Meßzelleneinfassung (3) eine thermische Ausdehnung von Meßzelle (1) und eingespritzter Dichtung (29) in radialer Richtung gleich einer thermischen Ausdehnung der Meßzelleneinfassung (3) in radialer Richtung ist.

4. Drucksensor nach Anspruch 2, bei dem die
eingespritzte Dichtung (29) aus einem Silikon oder aus Polyurethan besteht.

5. Drucksensor nach Anspruch 1, bei dem
das Schutzpolster (25) ein Schaumstoff ist.

6. Drucksensor nach Anspruch 5, bei dem
der Schaumstoff offenporige und geschlossenporige Zellen aufweist.

7. Drucksensor nach Anspruch 1, bei dem
der Verguß (27) ein Polyurethan ist.

8. Drucksensor nach Anspruch 1, der eine metallische Abdeckung (28) aufweist, die zwischen dem Verguß (27) und dem Schutzpolster (25) verläuft.

## Claims

1. Pressure sensor with
- a measuring cell (1, 46)
- a measuring cell enclosure (3, 47) and
- sensor electronics (15) connected to the measuring cell (1, 46), **characterized in that:**
- the sensor electronics (15) are encapsulated in a protective padding (25) and
- the protective padding (25) is surrounded by a sealing compound (27)

2. Pressure sensor as per Claim 1, where a seal (29) is injected into a gap located between the measuring cell (1) and the measuring cell enclosure (3) in a radial direction.

3. Pressure sensor as per Claim 2, where, on account of the dimensions of the measuring cell (1), the injected seal (29) and the measuring cell enclosure (3), a thermal expansion of the measuring cell (1) and injected seal (29) in the radial direction is the same as a thermal expansion of the measuring cell enclosure (3) in the radial direction.

4. Pressure sensor as per Claim 2, where the injected seal (29) is made of silicone or polyurethane.

5. Pressure sensor as per Claim 1, where the protective padding (25) is foam material.

6. Pressure sensor as per Claim 5, where the foam material exhibits open-pore and closed-pore cells.

7. Pressure sensor as per Claim 1 where the sealing compound (27) is a polyurethane.

8. Pressure sensor as per Claim 1, which exhibits a metal cover (28) extending between the sealing compound (27) and the protective padding (25).

## Revendications

1. Capteur de pression avec
- une cellule de mesure (1, 46)
- un cadre de cellule de mesure (3, 47) et
- une électronique capteur (15) reliée avec la cellule de mesure (1, 46),
**caractérisé en ce que**
- l'électronique capteur (15) est encapsulée dans un coussin de protection (25) et
- le coussin de protection (25) est entouré d'un enrobage (27).

2. Capteur de pression selon la revendication 1, pour lequel un joint (29) est injecté dans une fente existant en direction radiale, entre la cellule de mesure (1) et le cadre de cellule de mesure (3).

3. Capteur de pression selon la revendication 2, pour lequel en raison des dimensions de la cellule de mesure (1), du joint injecté (29) et du cadre de cellule de mesure (3), une dilatation thermique de la cellule de mesure (1) et du joint injecté (29) en direction radiale est égale à une dilatation thermique du cadre de cellule de mesure (3) en direction radiale.

4. Capteur de pression selon la revendication 2, pour lequel le joint injecté (29) est en silicone ou en polyuréthane.

5. Capteur de pression selon la revendication 1, pour lequel le coussin de protection (25) est une mousse.

6. Capteur de pression selon la revendication 5, pour lequel la mousse comporte des cellules à pores ouverts et à pores fermés.

7. Capteur de pression selon la revendication 1, pour lequel l'enrobage (27) est un polyuréthane.

8. Capteur de pression selon la revendication 1, qui comprend un couvercle métallique (28) se trouvant entre l'enrobage (27) et le coussin de protection (25).
